# EUROPÄISCHE PATENTSCHRIFT

(11) **EP 2 849 918 B1**
(45) Veröffentlichungstag und Bekanntmachung des Hinweises auf die Patenterteilung: **13.07.2016**
(21) Anmeldenummer: 13722767.4
(22) Anmeldetag: 16.05.2013
(51) Int. Cl.: B23Q 11/10, B24B 55/03

(54) **KÜHLMITTELVERTEILER FÜR EINE WERKZEUGMASCHINE**
COOLANT DISTRIBUTOR FOR A MACHINE TOOL
DISTRIBUTEUR DE FLUIDE DE REFROIDISSEMENT POUR MACHINE-OUTIL

(30) Priorität: 16.05.2012 DE 102012104263
(43) Veröffentlichungstag der Anmeldung: 25.03.2015
(73) Patentinhaber: Walter Maschinenbau GmbH, 72072 Tübingen (DE)
(72) Erfinder: WOLGRAM, Stefan, 72661 Grafenberg (DE); NUBER, Wolfgang, 72108 Rottenburg (DE)
(74) Vertreter: Rüger, Barthelt & Abel
(86) Internationale Anmeldenummer: PCT/EP2013/060130
(87) Internationale Veröffentlichungsnummer: WO 2013/171298

(56) Entgegenhaltungen:
- DE-A1-102009 048 018
- DE-C2- 19 844 242
- US-A- 4 006 861
- US-A1- 2011 182 687

## Beschreibung

Die Erfindung betrifft einen Kühlmittelverteiler für eine Werkzeugmaschine. Bei der Werkzeugmaschine kann es sich beispielsweise um eine Schleifmaschine, eine Erodiermaschine, eine Fräsmaschine, Kombinationen der genannten Werkzeugmaschinen oder auch Bearbeitungszentren handeln. Der Kühlmittelverteiler dient dazu, das in der Werkzeugmaschine bereitgestellte Kühlmittel an die Stelle oder die Stellen zu bringen, an denen das Werkzeug mit dem Werkstück in Eingriff steht bzw. an denen eine Kühlung erforderlich ist.

Bei Werkzeugmaschinen mit einem automatischen Werkzeugwechsel kann es nach einem Werkzeugwechsel erforderlich sein, die Kühlmittelverteilung neu zu justieren. Dies liegt daran, dass die Größe der Werkzeuge nicht übereinstimmt und sich daher die Eingriffstelle zwischen dem Werkzeug und dem Werkstück nicht mehr an derselben Position befindet.

Um dieses Problem zu lösen, ist es beispielsweise aus der gattungsgemäßen Druckschrift DE 198 44 242 C2 bekannt, gemeinsam mit dem Werkzeug auch eine daran angepasste Kühlmittelverteileinheit auszutauschen. Hierzu wird die Kühlmittelverteileinheit mit dem Werkzeug verbunden. Die Kühlmittelverteileinheit weist einen Nippel auf, der in eine Einstecköffnung eines Zufuhrkanals einsteckbar ist. Die Einsteckrichtung des Nippels in die Öffnung entspricht der Einsteckrichtung der Werkzeugspindel in die Spindelaufnahme. Beim Verspannen des Werkzeugs soll dabei eine dichte Verbindung zwischen dem Nippel der Kühlmittelverteileinheit und der Öffnung des Zufuhrkanals erreicht werden.

Bei diesem bekannten Kühlmittelverteiler können insbesondere bei sehr hohem Drücken von bis zu 50 bar Dichtigkeitsprobleme zwischen dem Nippel und der Einstecköffnung am Zufuhrkanal auftreten. Wie genau eine mechanische und dabei fluiddichte Verbindung zwischen dem Nippel und der Einstecköffnung hergestellt werden kann, ist aus DE 198 44 242 C2 nicht bekannt.

Es kann daher als Aufgabe der vorliegenden Erfindung angesehen werden, einen verbesserten Kühlmittelverteiler zu schaffen.

Diese Aufgabe wird durch einen Kühlmittelverteiler mit den Merkmalen des Patentanspruches 1 gelöst.

Der erfindungsgemäße Kühlmittelverteiler weist eine Anschlusseinheit mit einer Anschlussfläche auf, an der wenigstens ein Zufuhrkanal für das Kühlmittel ausmündet. Diese Anschlusseinheit ist dafür vorgesehen und eingerichtet, am Maschinengestell ortsfest angeordnet zu werden. Verbindungsrohre für die Zufuhr von Kühlmittel werden vorzugsweise unlösbar mit der Anschlusseinheit verbunden, beispielsweise durch Schweißen. An der Anschlusseinheit ist außerdem eine Führungsrichtung vorhanden, die wenigstens eine um einen Neigungswinkel geneigt zur Anschlussfläche verlaufende Anlagefläche aufweist.

Der Kühlmittelverteiler enthält außerdem eine auswechselbare Verteilereinheit. Die Verteilereinheit kann bei einem Werkzeugwechsel über eine Greifeinrichtung mit der Anschlusseinheit verbunden bzw. von dieser getrennt werden. Die Verteilereinheit weist eine Verteilerfläche auf, an der wenigstens ein Verteilerkanal ausmündet. Bei hergestellter Verbindung zwischen der Anschlusseinheit und der Verteilereinheit besteht eine fluidische Verbindung zwischen dem Zufuhrkanal und dem Verteilerkanal. Die Verteilereinheit weist eine der Anlagefläche der Anschlusseinheit zugeordnete Gegenanlagefläche auf. Die Gegenanlagefläche ist um den Neigungswinkel gegenüber der Verteilerfläche geneigt. Die Verteilereinheit ist in einer Verbindungsrichtung, die parallel zur Anlagefläche verläuft, relativ zur Anschlusseinheit bewegbar. Bei dieser Bewegung gleitet die Gegenanlagefläche entlang der Anlagefläche. Dabei ändert sich wegen des Neigungswinkels der Abstand zwischen der Verteilerfläche und der Anschlussfläche oder es ändert sich die Andrückkraft, mit der die Verteilerfläche gegen die Anschlussfläche gedrückt wird. Auf diese Weise kann über die durch den Neigungswinkel erreichte Keilwirkung eine fluiddichte Kopplung zwischen dem wenigstens einen Verteilerkanal in der Verteilereinheit und dem jeweils zugeordneten Zufuhrkanal in der Anschlusseinheit erreicht werden. Gleichzeitig wird auch eine mechanische Verbindung zwischen der Verteilereinheit und der Anschlusseinheit hergestellt.

Mit Hilfe des erfindungsgemäßen Kühlmittelverteilers kann sehr einfach eine fluiddichte Verbindung zwischen einer auswechselbaren Verteilereinheit sowie einer maschinengestellseitigen Anschlusseinheit hergestellt werden. Die mechanische bzw. fluidische Verbindung ist dabei unabhängig von der Art und Weise, wie und mit welcher Kraft das Werkzeug in einer Werkzeugaufnahme der Werkzeugmaschine aufgenommen und gelagert ist. Die Verteilereinheit ist separat oder auch als Einheit gemeinsam mit dem zugeordneten Werkzeug auswechselbar. Über die Anschlussfläche bzw. die Verteilerfläche ist es sehr einfach möglich, auch mehrere fluidisch voneinander getrennte Fluidleitungen vorzusehen. Beispielsweise können zwei, drei oder mehr Zufuhrkanäle vorhanden sein, wobei jedem Zufuhrkanal ein Verteilerkanal zugeordnet ist. In den Zufuhrkanälen kann das Kühlmittel mit unterschiedlich hohen Drücken bereitgestellt werden, z.B. 20 und 40 bar. Der hohe Kühlmitteldruck kann beispielsweise zum Freispülen des Werkzeugs mit Kühlmittel und der niedrigeren Fluiddruck zum Kühlen an der oder den zu kühlenden Stellen während des Betriebs verwendet werden. Beim Beaufschlagen der Anschlusseinheit mit einer Haltekraft in Verbindungsrichtung werden durch die schräggestellte Anschlussfläche und die daran anliegende schräggestellte Verteilerfläche gegeneinander gedrückt. Die Kraft oder der Druck, mit dem die Verteilerfläche an die Anschlussfläche gedrückt wird, kann bedarfsgemäß sehr genau vorgegeben werden.

Bei einer bevorzugten Ausführungsform weist die Anschlusseinheit einen Grundkörper und einen insbesondere rechtwinklig zur Anschlussfläche verschiebbar am Grundkörper angeordneten Anschlusskörper auf. Die Anschlussfläche ist am Anschlusskörper vorgesehen. Der Anschlusskörper kann eine plattenförmige Gestalt aufweisen und daher auch als Anschlussplatte bezeichnet werden. Zwischen dem Grundkörper und dem Anschlusskörper kann wenigstens ein nachgiebiges Element angeordnet sein. Beim Andrücken der Verteilerfläche gegen die Anschlussfläche wird das wenigstens eine nachgiebige Element elastisch verformt. Durch diese Ausgestaltung ist sichergestellt, dass bei hergestellter Verbindung zwischen der Verteilereinheit und der Anschlusseinheit eine Selbsthemmung bzw. ein Blockieren verhindert wird. Die geringfügige Beweglichkeit des Anschlusskörpers gegenüber dem Grundkörper stellt sicher, dass die mechanische Verbindung zwischen der Verteilereinheit und der Anschlusseinheit problemlos wieder gelöst werden kann.

Das wenigstens eine nachgiebige Element zwischen dem Anschlusskörper und dem Grundkörper kann gleichzeitig als Dichtungselement dienen. Da die Anschlussfläche am Anschlusskörper vorhanden ist, verläuft ein Abschnitt des Zufuhrkanals im Anschlusskörper während ein anderer Abschnitt im Grundkörper vorgesehen ist. Das nachgiebige Element dichtet die Verbindungsstelle zwischen diesen beiden Abschnitten des Zufuhrkanals ab. Beispielsweise kann als nachgiebiges Element ein Dichtungsring oder ein O-Ring verwendet werden. Das nachgiebige Element besteht beispielsweise aus Kunststoff oder aus Stahl, oder aus einem anderen ölbeständigen Material. Beispielsweise kann Nitrilkautschuk (NBR) als Werkstoff für das nachgiebige Element verwendet werden.

Es ist außerdem vorteilhaft, wenn zwischen dem im Grundkörper verlaufenden Abschnitt und dem im Anschlusskörper verlaufenden Abschnitt des Zufuhrkanals am Anschlusskörper eine Ringstufe gebildet ist. Über diese Ringstufe kann der im Verteilerkanal bzw. im Zufuhrkanal herrschende Kühlmitteldruck dazu verwendet werden, den Anschlusskörper und mithin die Anschlussfläche gegen die Verteilerfläche zu drücken. Dadurch kann die Abdichtung der fluidischen Verbindung zwischen Anschlusseinheit und Verteilereinheit weiter verbessert werden.

Die an der Anschlusseinheit vorhandene Führungseinrichtung kann zwei parallele zueinander in Verbindungsrichtung verlaufende Führungsschienen aufweisen. Die Führungsschienen sind insbesondere auf gegenüberliegenden Seiten der Anschlussfläche angeordnet. Die Verteileinheit kann in Verbindungsrichtung zwischen den beiden Führungsschienen zum Herstellen oder Lösen einer Verbindung sehr einfach gelöst werden.

Jede der Führungsschienen kann dabei eine Anlagefläche aufweisen. Die Anlageflächen können der Anschlussfläche zugewandt sein, wobei sich der Abstand zwischen den Anlageflächen und der Anschlussfläche der Anschlusseinheit von einer Einführseite aus gesehen in Verbindungsrichtung verringert, wodurch der Neigungswinkel zwischen den beiden Anlageflächen und der Anschlussfläche gebildet ist.

Vorzugsweise sind die Führungsschienen lösbar an einem jeweils zugeordneten Sockel der Anschlusseinheit angeordnet. Die Führungsschienen sind bevorzugt aus einem anderen Werkstoff hergestellt, als der Anschlusskörper und/oder der Grundkörper der Anschlusseinheit. Insbesondere sind die Führungsschienen aus einem Material mit guten Gleiteigenschaften wie etwa Messing, Kupfer, Kunststoff oder ähnlichem hergestellt. Der Anschlusskörper besteht vorzugsweise aus Stahl.

Die Anschlussfläche kann mehrere voneinander mit Abstand angeordnete Flächenabschnitte aufweisen. Bei einem bevorzugten Ausführungsbeispiel ist die Anschlussfläche an wenigstens einem ringförmigen Dichtrand vorhanden. Jeder Zufuhrkanal wird durch einen zugeordneten ringförmig geschlossenen Dichtrand vollständig umschlossen. Die Anschlussfläche ist daher unmittelbar im Anschluss an die Zuführkanäle angeordnet und betragsmäßig klein. Daher wird der Druck zwischen der Anschlussfläche und der Verteilerfläche bei einer vorgegebenen Anpresskraft groß und die Dichtheit der fludischen Verbindung zwischen der Anschlusseinheit und der Verteilereinheit weiter verbessert.

Zum Aufrechterhalten der Anpresskraft zwischen der Verteilerfläche und der Anschlussfläche bei hergestellter mechanischer und fluidischer Verbindung ist vorzugsweise eine Verriegelungseinrichtung vorgesehen. Im Verriegelungszustand verhindert die Verriegelungseinrichtung eine Relativbewegung der Verteilereinheit gegenüber der Anschlusseinheit. Somit bleibt die fluiddichte Verbindung im Verriegelungszustand erhalten und die Anpresskraft zwischen der Verteilerfläche und der Anschlussfläche ändert sich nicht. Die Aufrechterhaltung der Anpresskraft zwischen der Anschlussfläche und der Verteilerfläche kann auf diese Weise ohne zusätzlichen Aufwand an Kraft und Energie aufrecht erhalten werden.

Bei einem Ausführungsbeispiel weist die Verriegelungseinrichtung eine an der Anschlusseinheit befestigte Betätigungseinheit mit wenigstens einem Verriegelungselement auf. Das Verriegelungselement kann zwischen einer Verriegelungsstellung und einer Entriegelungsstellung verschiebbar gelagert sein.

Vorzugsweise ist das wenigstens eine Verriegelungselement durch eine Vorspannkraft eines Vorspannelements beaufschlagt. Über diese Vorspannkraft wird das Verriegelungselement in seine Verriegelungsstellung gedrängt. Bei einem Ausführungsbeispiel sind zwei Verriegelungselemente vorhanden, wobei beiden Verriegelungselementen dasselbe Vorspannelement zugeordnet sein kann. Die Bewegungsrichtung des wenigstens einen Verriegelungselements zwischen der Verriegelungsstellung und der Entriegelungsstellung ist vorzugsweise quer und insbesondere rechtwinklig zur Verbindungsrichtung orientiert. Die für das aufrechterhalten der Verriegelungsstellung notwendige Kraft kann auf diese Weise verschieden sein, von der Kraft, mit der die Verteileinheit in Verbindungsrichtung beaufschlagt wird.

Zum Bewegen des Verriegelungselements zwischen der Verriegelungsstellung und der Entriegelungsstellung kann jedes Verriegelungselement ein Betätigungsteil aufweisen. Insbesondere ragt jedes Betätigungsteil aus dem Gehäuse der Betätigungseinheit heraus. Es können zwei Verriegelungselemente mit zwei Betätigungsteilen vorhanden sein, wobei die Betätigungsteile auf entgegengesetzten Seiten des Gehäuses der Betätigungseinheit herausragen. Bei dieser Anordnung lassen sich die Betätigungsteile von entgegengesetzten Seiten her sehr einfach durch eine für das Wechseln des Werkzeugs und/oder der Verteilereinheit vorhandene Greifeinrichtung betätigen, um die Verriegelungseinrichtung zwischen ihrem Verriegelungszustand und ihrem Entriegelungszustand umzuschalten.

Vorzugsweise dient das wenigstens eine Betätigungssteil der Verriegelungseinrichtung gleichzeitig auch zum Ergreifen der Verteilereinheit durch die Greifereinrichtung während des Auswechselns. Um zu verhindern, dass die Verteilereinheit beim Ergreifen von zwei entgegengesetzten Seiten her um eine Achse kippt, die die beiden Angriffsstellen der Greifeinrichtung verbindet, kann mit Abstand zu einem Betätigungsteil am Gehäuse der Betätigungseinheit ein Abstützelement vorhanden sein. Die Greifeinrichtung kann sich an diesem Abstützelement abstützten, so dass ein Drehmoment um die Achse zwischen den Angriffstellen vom Abstützelement und einem daran anliegenden Teil der Greifeinrichtung aufgenommen werden kann.

Vorteilhafte Ausgestaltungen des erfindungsgemäßen Kühlmittelverteilers ergeben sich aus den abhängigen Patentansprüche sowie der Beschreibung. Die Beschreibung beschränkt sich auf wesentliche Merkmale der Erfindung. Die Zeichnung ist ergänzend heranzuziehen. Im folgenden werden Ausführungsbeispiele des erfindungsgemäßen Kühlmittelverteilers anhand der beigefügten Zeichnung näher erläutert. Es zeigen:
Figur 1 eine perspektivische Darstellung eines Ausführungsbeispiels eines Kühlmittelverteilers in Gebrauchslage in einer Werkzeugmaschine sowie das Bearbeitungswerkzeug der Werkzeugmaschine in Form eines Schleifwerkzeugs,

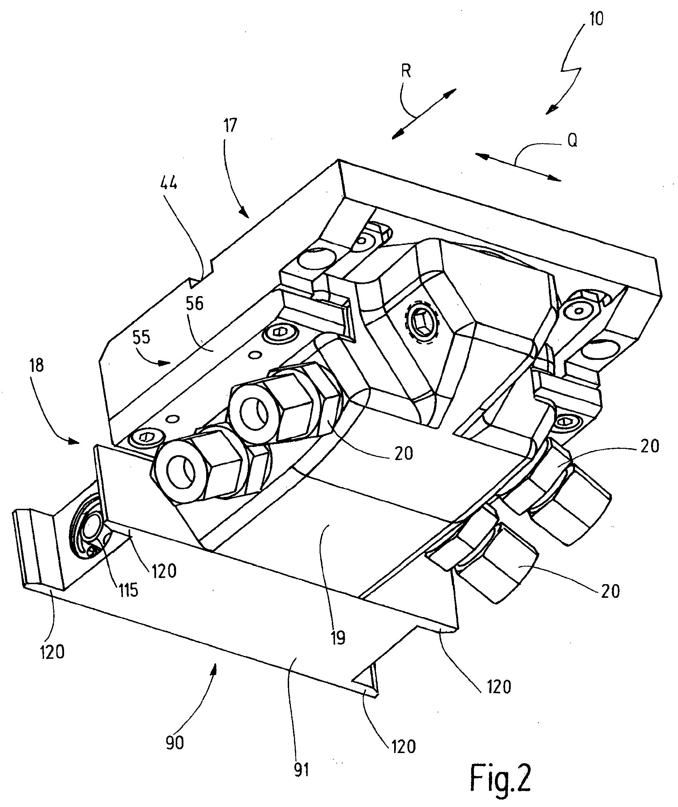

Figur 2 eine perspektivische Darstellung des Kühlmittelverteilers aus Figur 1,

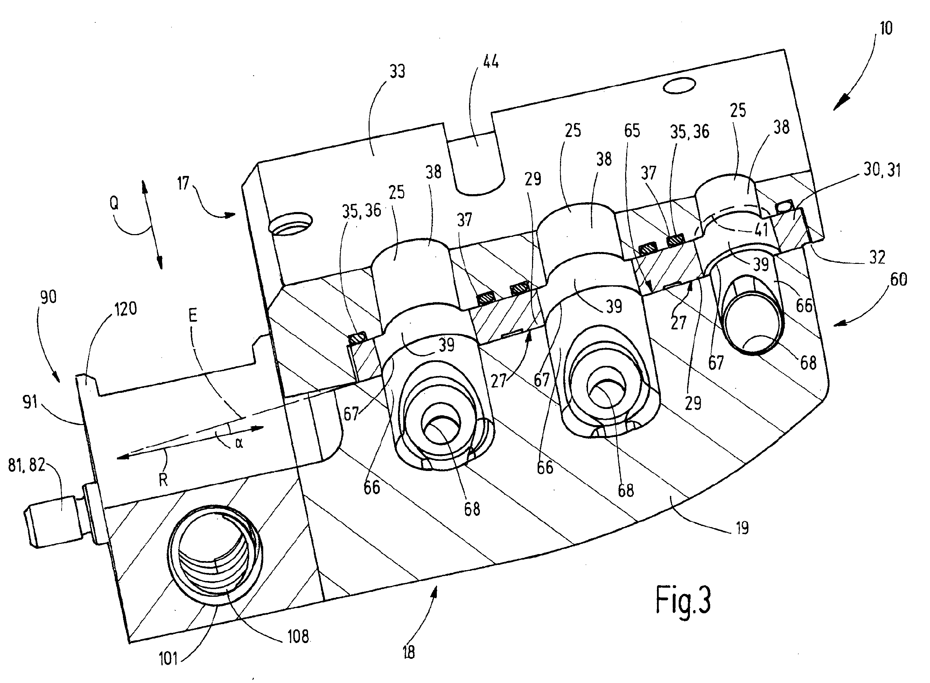

Figur 3 eine perspektivische geschnittene Darstellung des Kühlmittelverteilers gemäß der Figuren 1 und 2 in einem Längsschnitt,
Figur 4 eine perspektivische geschnittene Darstellung des Kühlmittelverteilers gemäß der Figuren 1 bis 3 in einem Querschnitt,
Figur 5 eine perspektivische Darstellung eines Verteilerkörpers einer Verteilereinheit des Kühlmittelverteilers gemäß der Figuren 1 bis 4,
Figur 6 eine perspektivische Darstellung einer Anschlusseinheit des Kühlmittelverteilers gemäß der Figuren 1 bis 5 mit Blick auf die Anschlussfläche,
Figur 7 eine perspektivische Darstellung im Längsschnitt durch ein Ausführungsbeispiel einer Verriegelungseinrichtung,
Figur 8 eine perspektivische geschnittene Darstellung der Verriegelungseinrichtung gemäß Figur 7 in einem weiteren Längsschnitt und
Figur 9 eine perspektivische Darstellung der Verriegelungselemente, der zugeordneten Betätigungselemente, eines Vorspannelements sowie einer Verdrehsicherung der Verriegelungseinrichtung gemäß der Figuren 7 und 8.

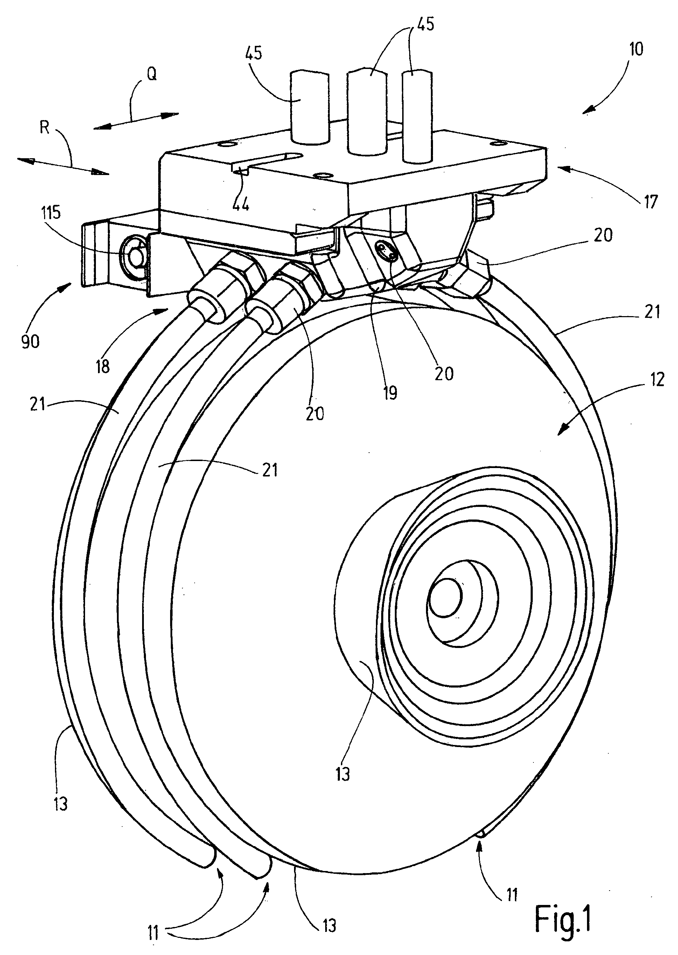

Figur 1 zeigt ein Ausführungsbeispiel eines Kühlmittelverteilers 10 für eine Werkzeugmaschine und beispielsgemäß eine Schleifmaschine. Der Kühlmittelverteiler 10 kann auch für andere Werkzeugmaschinen eingesetzt werden. Er dient dazu, das in der Werkzeugmaschine bereitgestellte unter Druck stehende Kühlmittel an zu kühlende Stellen 11 zu leiten. Die zu kühlenden Stellen 11 sind insbesondere die Stellen, an denen ein Bearbeitungswerkzeug 12 der Werkzeugmaschine mit einem zu bearbeitenden Werkstück in Eingriff gebracht werden kann. Bei dem in Figur 1 gezeigten Beispiel handelt es sich bei dem Bearbeitungswerkzeug 12 um ein Schleifwerkzeug, das im vorliegenden Fall mehrere Schleifscheiben 13 aufweist. Daher wird das Kühlmittel über den Kühlmittelverteiler 10 auch an mehrere Stellen 11 an den Schleifscheiben 13 geleitet.

Der Kühlmittelverteiler 10 weist eine Anschlusseinheit 17 auf, die dazu eingerichtet ist, fest mit dem Maschinengestell der Werkzeugmaschine verbunden zu werden. Die Anschlusseinheit 17 ist daher relativ zum Maschinengestell ortsfest angeordnet. Der Kühlmittelverteiler 10 weist außerdem eine auswechselbare und somit relativ zur Anschlusseinheit 17 bewegbare Verteilereinheit 18 auf. Die Verteilereinheit 18 weist an einem Verteilerkörper 19 angeordnete und von außen zugängliche Verteileranschlüsse 20 auf, die beispielsweise als Steck-, Bajonett- oder Schraubverbinder oder auf andere geeignete Weise ausgestaltet sein können. An die Verteileranschlüsse 20 ist ein Rohr, ein Schlauch oder eine andere geeignete Kühlmittelleitung 21 anschließbar, um das Kühlmittel vom Verteileranschluss 20 an die zu kühlende Stelle 11 zu leiten. Am Austrittsende der Leitungen 21 können Endstücke wie etwa Austrittsdüsen oder dergleichen angeordnet sind.

Beim dem hier beschriebenen Ausführungsbeispiel weist die Verteilereinheit sechs Verteileranschlüsse 20 auf. Die Anzahl der Verteileranschlüsse 20 ist variabel. Die nicht verwendeten Verteileranschlüsse 20 können durch Blindstopfen fluiddicht verschlossen werden. Mehrere der vorhandenen Verteileranschlüsse 20 können fluidisch miteinander verbunden sein.

Die Anschlusseinheit 17 weist einen oder mehrere und beispielsgemäß drei Zufuhrkanäle 25 auf. Jeder Zufuhrkanal 25 mündet in einer Zufuhrkanalmündung 26 an einer Anschlussfläche 27 aus. Die Anschlussfläche 27 erstreckt sich in einer Ebene E. Bei dem hier beschriebenen Ausführungsbeispiel ist die Anschlussfläche 27 in mehrere voneinander mit Abstand angeordnete Flächenabschnitte 28 unterteilt. Jeder Flächenabschnitt 28 ist an einem ringförmig geschlossenen Dichtrand 29 vorgesehen. Um jede Zufuhrkanalmündung 26 ist ein Dichtrand 29 angeordnet und grenzt beispielsgemäß unmittelbar daran an. Der Dichtrand 29 ist im Querschnitt gesehen rechteckförmig konturiert. Die drei Flächenabschnitte 28 der Dichtränder 29 liegen in der Ebene E und bilden gemeinsam die Anschlussfläche 27. In Abwandlung hierzu könnte die Anschlussfläche 27 auch als zusammenhängende Planefläche ausgestaltet sein, in die die Zufuhrkanäle 25 einmünden.

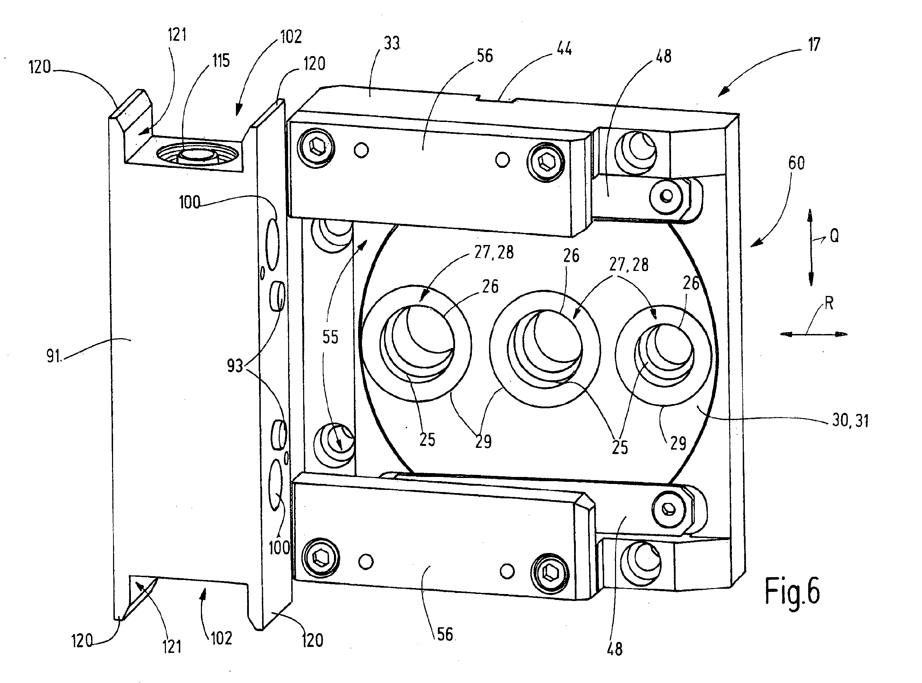

Die Anschlussfläche 27 und beispielsgemäß die Dichtränder 29 sind beim Ausführungsbeispiel an einem Anschlusskörper 30 der Anschlusseinheit 17 angeordnet, der beim bevorzugten Ausführungsbeispiel plattenförmig ausgeführt ist und daher eine Anschlussplatte 31 bildet. Die Anschlussplatte 31 kann wie in Figur 6 dargestellt zum Beispiel eine kreisrunde Umfangskontur aufweisen. Die Anschlussplatte 31 ist in einer an die Kontur der Anschlussplatte angepassten Ausnehmung 32 an einem Grundkörper 33 gelagert. Zwischen der Anschlussplatte 31 und dem Boden 34 der Ausnehmung 32 ist wenigstens ein nachgiebiges Element 35 angeordnet. Das nachgiebige Element 35 besteht beim Ausführungsbeispiel aus Kunststoff, wie etwa Nitrilkautschuk, oder Stahl und kann sich bei den üblicherweise auf die Anschlussfläche 27 bzw. die Anschlussplatte 31 aufgebrachten Anpresskräfte elastisch verformen. Beispielgemäß ist jedem Zufuhrkanal 25 ein nachgiebiges Element 35 zugeordnet, das neben dem Erzeugen einer elastischen Beweglichkeit zwischen der Anschlussplatte 31 und dem Grundkörper 33 auch dazu dient, die Verbindungsstelle zwischen der Anschlussplatte 31 und dem Grundkörper 33 fluidisch abzudichten. Das nachgiebige Element 35 ist daher als Dichtelement 36 in Form eines Dichtrings oder O-Rings ausgeführt. Das Dichtelement 36 ist in jeweils eine Ringnut 37 am Boden 34 der Ausnehmung 32 des Grundkörpers 33 eingesetzt. In unverformtem Zustand ragt das Dichtelement 36 aus der Ringnut 37 heraus. Die Ringnut 37 dient dazu, die Verformung des Dichtelements 36 zu begrenzen und das Dichtelement 36 in einer gewünschten Position zu lagern.

Jeder Zufuhrkanal 25 durchsetzt sowohl den Grundkörper 33, als auch die Anschlussplatte 31. Ein erster Abschnitt 38 jedes Zufuhrkanals 25 verläuft innerhalb des Grundkörpers 33 und mündet am Boden 34 der Ausnehmung 32 aus. Ein zweiter Abschnitt 39 jedes Zufuhrkanals 25 durchsetzt die Anschlussplatte 31 und erstreckt sich zwischen der Zufuhrkanalmündung 26 an der Anschlussfläche 27 und der dem Boden 34 der Ausnehmung 32 zugeordneten Innenseite 40 der Anschlussplatte 31. Die beiden Abschnitte 38, 39 des Zufuhrkanals sind jeweils zylindrisch und können koaxial zueinander angeordnet sein.

Bei dem hier beschriebenen Ausführungsbeispiel ist der Durchmesser des in der Anschlussplatte 31 verlaufenden zweiten Abschnitts 39 größer als der Durchmesser des ersten Abschnitts 38 des Zufuhrkanals 25. Dadurch ist an der Verbindungsstelle zwischen den beiden Abschnitten 28, 29 eine Ringstufe 41 gebildet. Das Vorsehen einer solchen Ringstufe 41 ist optional. Eine solche Ringstufe 41 kann an allen oder lediglich einem Teil der Zufuhrkanäle 25 vorgesehen sein.

Auf der der Anschlussfläche 27 entgegengesetzten Seite ist jeder Zufuhrkanal 25 mit einem Kühlmittelrohr 45 verbunden. Die Kühlmittelrohre 45 sind stoffschlüssig mit dem Grundkörper 33 verbunden, beispielsweise mittels einer Schweißverbindung. Im Grundkörper 33 sind auf seiner Oberseite Ablaufnuten 44 vorhanden, durch die dort vorhandenes, beispielsweise gestautes Kühlmedium abfließen zu lassen.

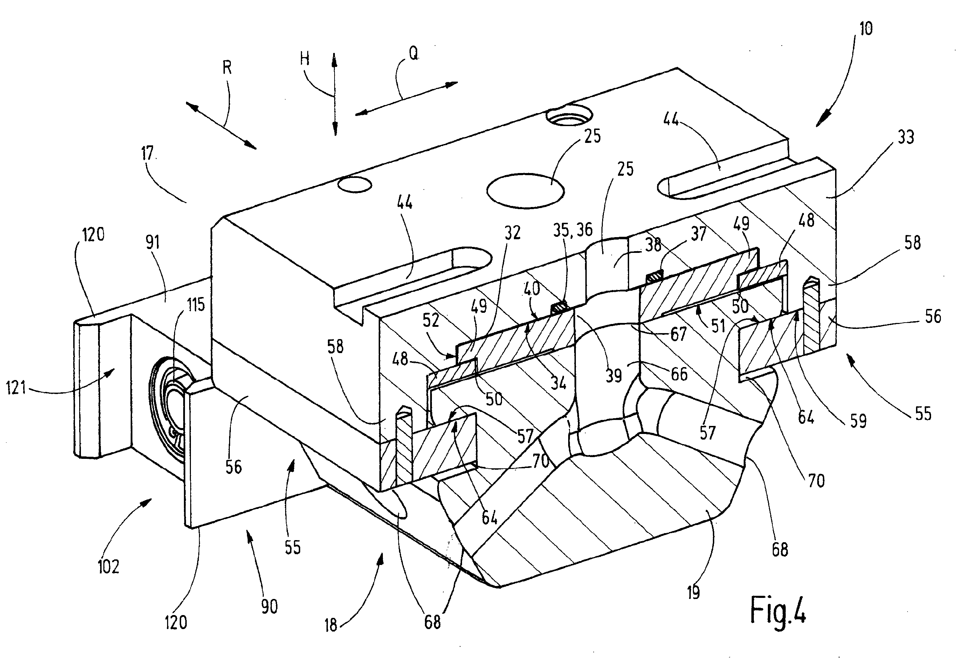

Um die Anschlussplatte 31 in der Ausnehmung 32 zu halten, weist die Anschlusseinheit 17 eine Halteeinrichtung auf, die beim Ausführungsbeispiel durch mehrere und beispielweise zwei Haltebügel 48 ausgeführt ist. Die beiden Haltebügel 48 sind lösbar mit dem Grundkörper 33 verbunden, beispielweise mit Hilfe einer Schraubverbindung. Wie in den Figuren 4 und 6 zu erkennen ist, verlaufen die Haltebügel 48 an zwei gegenüberliegenden Seiten der Ausnehmung 32 mit Abstand zum Boden 34 der Aussparung. Zumindest abschnittsweise übergreifen die Haltebügel 48 die Ausnehmung 32 sowie Halteabschnitte 49 der Anschlussplatte 31. Die zwischen den Haltebügeln 48 und dem Boden 34 der Ausnehmung 32 verlaufenden Halteabschnitte 49 der Anschlussplatte 31 sind durch Vertiefungen 50 in Ihrer Dicke gegenüber den benachbarten Plattenabschnitten der Anschlussplatte 31 reduziert. Die Vertiefungen 50 sind auf der der Innenseite 40 entgegengesetzten Außenseite 51 der Anschlussplatte 31 eingebracht. In Draufsicht auf die Außenseite 51 hat die Vertiefung 50 die Kontur eines Kreissegments. Die Vertiefung 50 ist sowohl zur Außenseite 51, als auch zu einem Rand 52 der Anschlussplatte 31 hin offen. Die beiden in jeweils eine Vertiefung 50 eingreifenden Haltebügel 48 fixieren die kreisförmige Anschlussplatte 31 daher auch gegen eine Verdrehung in der Ausnehmung 32 des Grundkörpers 33.

Über die Differenz der Dicke der Halteabschnitte 49 gegenüber dem Abstand der Haltebügel 48 zum Boden 34 der Ausnehmung 32 kann das Bewegungsspiel der Anschlussplatte 31 gegenüber dem Grundkörper 33 vorgegeben werden. Die nachgiebigen Elemente 35 zwischen der Anschlussplatte 31 und dem Grundkörper 33 drücken die Anschlussplatte 31 dabei vom Boden 34 der Ausnehmung 32 wegen gegen die Haltebügel 48. Die Anschlussplatte 31 ist somit verlier- und verdrehsicher in der Ausnehmung 32 gehalten und gleichzeitig rechtwinklig zur Anschlussfläche 27 gegenüber dem Grundkörper 33 verschiebbar gelagert.

An der Anschlusseinheit 17 ist eine Führungseinrichtung 55 angeordnet. Die Führungseinrichtung 55 ist am Grundkörper 33 befestigt. Bei dem hier beschriebenen Ausführungsbeispiel weist die Führungseinrichtung 55 zwei parallel zueinander verlaufende Führungsschienen 56 auf, die lösbar am Grundkörper 33 befestigt sind, beispielsweise mit Hilfe einer Schraubverbindung. Die Führungsschienen 56 haben beispielsgemäß einen rechteckförmigen Querschnitt und sind vorzugsweise im Wesentlichen quaderförmig konturiert. Die Führungsschienen 56 erstrecken sich in eine Verbindungsrichtung R. Quer zur Verbindungsrichtung R, in einer Querrichtung Q, sind die beiden Verbindungsschienen 56 mit Abstand zueinander angeordnet. Die Führungsschienen sind aus einem Kunststoff oder Metall oder einer Metalllegierung mit guten Gleiteigenschaften hergestellt, beispielsweise aus Messing oder Stahl.

Jede Führungsschiene 56 weist eine Anlagefläche 57 auf. Die beiden Anlageflächen 57 verlaufen in einer gemeinsamen Ebene. Die Anzahl der Anlageflächen 57 kann in Abwandlung zum dargestellten Ausführungsbeispiel auch größer oder kleiner sein. Die Anlageflächen 57 erstrecken sich in einer Ebene, die durch die Verbindungsrichtung R und die Querrichtung Q aufgespannt ist. Gegenüber der Ebene E, in der sich die Verteilerfläche 27 erstreckt, sind die Anlageflächen 57 um einen Neigungswinkel α geneigt. Der Neigungswinkel α ist zwischen der Verbindungsrichtung R und der Ebene E der Anschlussfläche 27 gebildet.

Die Anlageflächen 57 sind auf der dem Grundkörper 33 bzw. der Anschlussplatte 31 zugewandten Seite der Führungsschienen 56 angeordnet. Beim Ausführungsbeispiel liegen die Anlageflächen 57 den Haltebügeln 48 mit Abstand gegenüber. Dies wird erreicht, in dem die Führungsschienen 56 an jeweils einem zugeordneten Sockel 58 des Grundkörpers angeordnet sind, der sich parallel zum jeweils benachbarten Haltebügel 48 erstreckt. Die beiden Sockel 58 erstrecken sich parallel zueinander in Verbindungsrichtung R. Jeder Sockel 58 weist eine der zugeordneten Führungsschiene 56 zugewandte Befestigungsfläche 59 auf, an der die Führungsschiene 56 befestigt ist. Die Befestigungsflächen 59 sind von der Anschlussplatte 31 und somit von der Anschlussfläche 27 quer zur Verbindungsrichtung R und quer zur Querrichtung Q in einer Höhenrichtung H mit Abstand angeordnet. Die Befestigungsflächen 59 sind beim Ausführungsbeispiel als ebene Flächen ausgeführt und verlaufen in Verbindungsrichtung R gesehen unter dem Neigungswinkel α gegenüber der Ebene E, in der sich die Anschlussfläche 27 erstreckt. Somit ist durch die Sockel 58 auch die Anlagefläche 57 der jeweils zugeordneten Führungsschiene 56 unter dem Neigungswinkel α geneigt gegenüber der Anschlussfläche 27. In Verbindungsrichtung R betrachtet verringert sich der Abstand der beiden Anlageflächen 57 gleichmäßig ausgehend von einer Einführseite 60 an der Anschlusseinheit 17 in Verbindungsrichtung R gesehen.

Der Grundkörper 33 und/oder der von der Anschlussplatte 31 gebildete Anschlusskörper 30 können aus Metall, beispielsweise aus Stahl, aus Kupfer oder aus einer Metalllegierung wie Messing hergestellt sein.

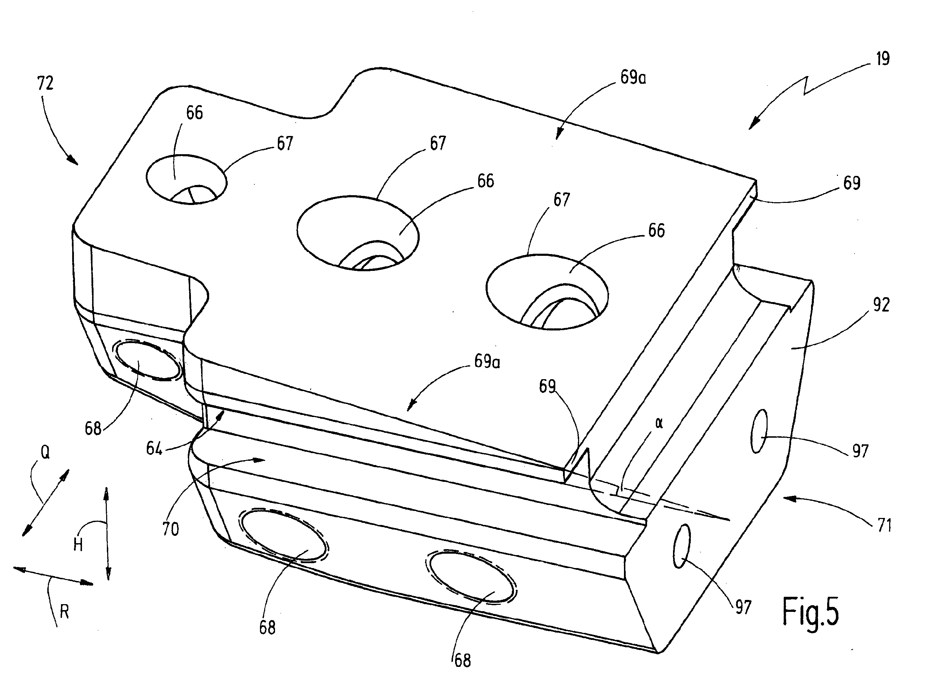

Über die Führungseinrichtung 55 ist die auswechselbare Verteilereinheit 18 mit der Anschlusseinheit 17 verbindbar. An der Verteilereinheit 18 und beim Ausführungsbeispiel am Verteilerkörper 19 ist für jede Anlagefläche 57 eine zugeordnete Gegenanlagefläche 64 vorgesehen. Bei hergestellter Verbindung liegen die Gegenanlageflächen 64 an der jeweils zugeordneten Anlagefläche 57 an. Die Verteilereinheit 18 weist außerdem eine Verteilerfläche 65 auf, die beim Ausführungsbeispiel als zusammenhängende plane Fläche ausgestaltet ist und beispielsgemäß am Verteilerkörper 19 vorgesehen ist (Figur 5). Alternativ zu dem hier dargestellten Ausführungsbeispiel könnte die Verteilerfläche 65 auch an einem separaten Körper, beispielsweise einer Platte vorgesehen sein, die mit dem Verteilerkörper 19 lösbar verbunden ist. Dies ist in Figur 5 durch die strichpunktierte Linie lediglich schematisch veranschaulicht. Eine solche auswechselbare Platte könnte bei auftretendem Verschleiß der Verteilerfläche 65 sehr einfach ausgetauscht werden.

Der Verteilerkörper 19 besteht beim Ausführungsbeispiel als Aluminium, um die bewegte Masse gering zu halten. Er könnte auch aus Kunststoff hergestellt sein. Wenn die Verteilerfläche an einer separaten Platte der Verteilereinheit 18 angeordnet ist, kann diese Platte aus einem anderen hinsichtlich seiner Gleiteigenschaften optimierten Material wie Stahl, Kupfer oder einer Metalllegierung, z.B. Messing hergestellt sein. Der Verteilerkörper 19 kann als Gussteil hergestellt sein.

Im Verteilerkörper 19 sind mehrere und beispielsgemäß drei Verteilerkanäle 66 vorhanden, wobei jeder Verteilerkanal 66 eine Verteilerkanalmündung 67 in der Verteilerfläche 65 aufweist. Die Verteilerkanalmündungen 67 sind derart angeordnet, dass sie bei hergestellter Verbindung zwischen der Verteilereinheit 18 und der Anschlusseinheit 17 fluidisch mit jeweils einem Zufuhrkanal 25 verbunden sind. Der Durchmesser der Verteilerkanäle 66 an der Verteilerkanalmündung 67 kann den Durchmesser der Zufuhrkanalmündung 26 an der Anschlussfläche 27 entsprechen. Um gewisse Abweichungen bei der Herstellung der Verbindung zwischen den beiden Einheiten 17, 18 auszugleichen, könnten die Durchmesser alternativ auch unterschiedlich groß gewählt werden, wobei der Durchmesser eines oder mehrerer der Verteilerkanalmündungen 67 beispielsgemäß kleiner ist als der Durchmesser der Zufuhrkanalmündung 26 an der Anschlussfläche 27. Die Verteilerkanalmündungen 67 sind beispielsgemäß in Verbindungsrichtung R in einer Reihe angeordnet.

Jeder Verteilerkanal 66 ist fluidisch mit einer Ausgangsöffnung 68 am Verteilerkörper 19 verbunden. In die Ausgangsöffnungen 68 wird jeweils ein Verteileranschluss 20 eingesetzt. Beim Ausführungsbeispiel sind jeweils zwei oder drei Ausgangsöffnungen 68 mit einem Verteilerkanal 66 fluidisch verbunden. Die Verteilerkanäle 66 sind strömungstechnisch derart ausgeführt, dass die an allen mit einem Verteilerkanal in fluidischer Verbindung stehenden Ausgangsöffnungen 68 in etwa gleich groß ist.

Wie in Figur 5 veranschaulicht, sind die beiden Gegenanlageflächen 64 in Verbindungsrichtung R um den Neigungswinkel α gegenüber der Verteilerfläche 65 geneigt. Die Gegenanlageflächen 64 sind an zwei Seitenvorsprüngen 69 vorgesehen, die von dem die Verteilerfläche 65 aufweisenden Teil des Verteilerkörpers 19 in Querrichtung Q entgegengesetzt wegragen. Die Dicke in Höhenrichtung H quer zur Verbindungsrichtung R und quer zur Querrichtung Q der beiden Seitenvorsprünge 69 ist nicht konstant, sondern nimmt von einer Rückseite 72 des Verteilerkörpers 19 aus betrachtet in Verbindungsrichtung R hin ab. Die Gegenanlageflächen 64 sind von der Verteilerfläche 65 weg orientiert. Die den Gegenanlageflächen 64 entgegengesetzten Rückseiten 69a der beiden Seitenvorsprünge 69 gehen beispielsgemäß stufen- und kantenlos in die Verteilerfläche 65 über und können dann auch Bestandteil der Verteilerfläche 65 sein.

Angrenzend an die Gegenanlagefläche 64 ist benachbart zum jeweiligen Seitenvorsprung 69 eine in Verbindungsrichtung R durchgehende Längsaussparung 70 im Verteilerkörper 19 vorhanden. In jede Längsaussparung 79 kann bei hergestellter Verbindung jeweils eine zugeordnete Führungsschiene 56 der Anschlusskanal 17 eingreifen, so dass die Anlagefläche 57 und die Gegenanlagefläche 64 in Kontakt kommen können. Im Querschnitt quer zur Verbindungsrichtung R betrachtet bilden die beiden Längsaussparungen 70 sozusagen eine in Querrichtung Q offene Seitennut im Verteilerkörper 19.

Der Verteilerkörper 19 weist in Verbindungsrichtung R betrachtet eine Vorderseite 71 und eine Rückseite 72 auf. In Verbindungsrichtung R nimmt der Abstand zwischen der Verteilerfläche 65 und den beiden Gegenanlagefläche 64 zur Vorderseite 71 hin ab und zur Rückseite 72 hin zu.

Zur Verbindung der Verteilereinheit 18 mit der Anschlusseinheit 17 wird die Verteilereinheit 18 mit der Vorderseite 71 des Verbindungskörpers 19 voran von der Einführseite 60 her zwischen die beiden Führungsschienen 56 eingesteckt, wobei die beiden Anlageflächen 57 an den Führungsschienen 56 mit den in Gegenanlageflächen 64 vom Verteilerkörper 19 aneinander gleiten. Bei einer fortgesetzten Bewegung nimmt der Abstand zwischen der Verteilerfläche 65 und der Anschlussfläche 27 ab, bis die beiden Flächen 27, 65 aneinander anliegen, wodurch auch eine fluidische Verbindung der Zufuhrkanäle 25 mit dem jeweils zugeordneten Verteilerkanal 66 über die jeweilige Zufuhrkanalmündung 26 und die Verteilerkanalmündung 67 hergestellt ist. Durch das Beaufschlagen der Verteilereinheit 18 mit einer Kraft in Verbindungsrichtung R von der Rückseite 72 zur Vorderseite 71 hin gerichtet wird eine Andrückkraft oder Anpresskraft zwischen der Verteilerfläche 65 und der Anschlussfläche 27 und mithin eine fluiddichte Verbindung erreicht. Die nachgiebigen Elemente 35 bzw. die Dichtungselemente 36 zwischen der Anschlussplatte 31 und dem Grundkörper 33 der Anschlusseinheit werden aufgrund dieser Anpresskraft elastisch verformt, so dass sich die Anschlussplatte 31 durch ein vorgegebenes Bewegungsspiele etwas weiter für die Ausnehmung 32 am Grundkörper 33 hineinbewegt. Auch bei hergestellter Verbindung befindet sich die Ebene E, in der sich die Anschlussfläche 27 erstreckt, außerhalb der Ausnehmung 32. Dadurch ist sichergestellt, dass die Verteilerfläche 65 ausschließlich an der Anschlussfläche 27 anliegt und sich ein ausreichend großer Anpressdruck zur fluiddichten Verbindung ergibt.

Der Kühlmittelverteiler 10 weist eine Verriegelungseinrichtung 80 auf, die dazu dient, bei hergestellter Verbindung zwischen der Verteilereinheit 18 und der Anschlusseinheit 18 eine Relativbewegung zwischen den Einheiten 17, 18 zu verhindern. Der bei hergestellter Verbindung zwischen der Anschlussfläche 27 und der Verteilerfläche 65 herrschende Anpressdruck bleibt somit aufrechterhalten.

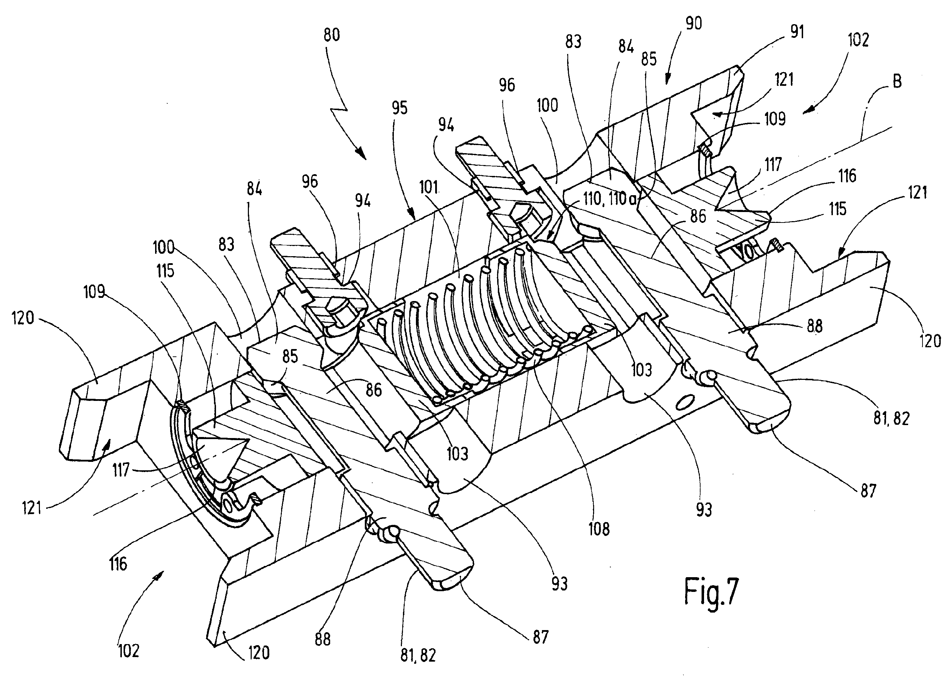

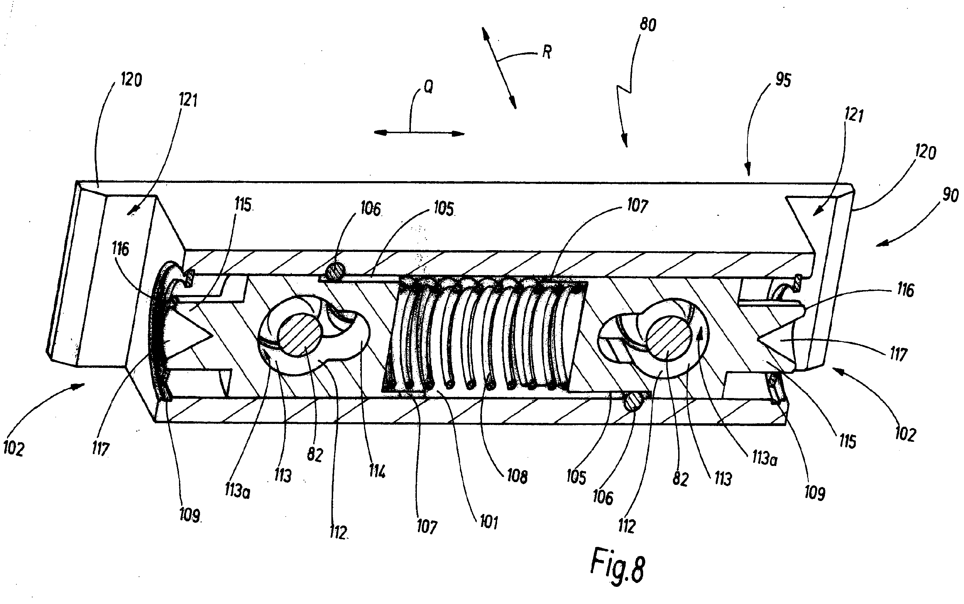

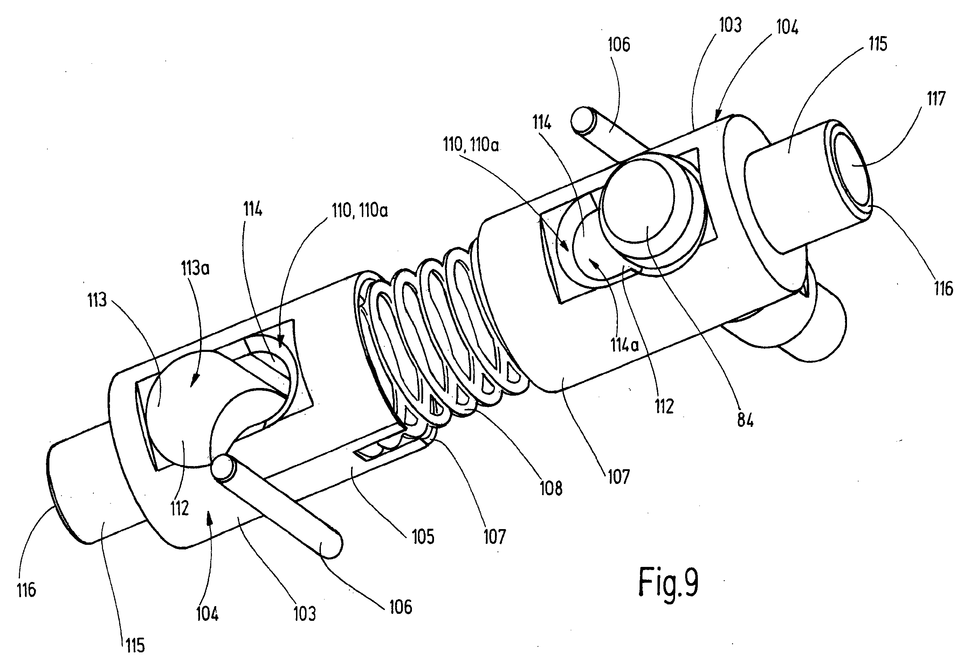

Die Verriegelungseinrichtung 80 ist beispielsweise in den Figuren 7 bis 9 dargestellt. Zu der Verriegelungseinrichtung 80 gehört wenigstens ein am Maschinengestell oder der Anschlusseinheit 17 angeordneter Haltekörper 81. Beim Ausführungsbeispiel sind zwei solche Haltekörper 81 in Form von Haltestiften 82 vorgesehen, deren jeweilige Längsachse in Verbindungsrichtung R orientiert ist. Mit einem axialen Befestigungsende 87 sind die beiden Haltestifte 82 maschinengestellseitig befestigt, beispielsweise verschraubt, während sie an ihrem entgegen gesetzten freien Ende 83 jeweils ein Kopfstück 84 aufweisen. Das Kopfstück 84 weist eine beispielsgemäß konische Haltefläche 85 auf, die auf der dem freien Ende 83 entgegen gesetzte Seite des Kopfstücks 84 vorgesehen ist. Die Haltefläche 85 umschließt das Kopfstück 84 koaxial zur Längsachse des Haltestifts 82. Der Normalenvektor der Haltefläche 85 verläuft schräg zur Längsachse des Haltestifts 82, beispielsweise in einem spitzen Winkel und beim Ausführungsbeispiel in einem Winkel von etwa 45°.

Im Anschluss an das Kopfstück 84 bzw. die Haltefläche 85 weist der Haltestift 82 einen Zentralabschnitt 86 auf, dessen Durchmesser geringer ist als der maximale Durchmesser des Kopfstücks 84. Zu seinem Befestigungsende 87 hin kann der Haltestift 82 im Anschluss an den Zentralabschnitt 86 einen Zentrierabschnitt 88 aufweisen, dessen Durchmesser größer ist als der des Zentralabschnitts 86. Der Zentrierabschnitt 88 ist optional.

Die Verriegelungseinrichtung 80 enthält außerdem eine Betätigungseinheit 90 mit einem Gehäuse 91. Die Betätigungseinheit 90 ist mithilfe ihres Gehäuses 91 an einer Anbringungsfläche 92 des Verteilerkörpers 19 an dessen Vorderseite 71 befestigt. Die Befestigung kann mithilfe einer Schraubverbindung erfolgen. Zusätzlich können koaxial zu einer jeweiligen Befestigungsschraube Zentrierhülsen zwischen das Gehäuse 91 und den Verteilerkörper 19 eingesetzt sein.

Zur Herstellung dieser Schraubverbindung sind im Gehäuse 91 beispielsgemäß zwei Durchgangslöcher vorgesehen, die das Gehäuse 91 vollständig durchsetzen. Jedes Durchgangsloch weist eine Ringschulter 94 zur Anlage des Schraubenkopfes auf. Axial mit Abstand zur Ringschulter 94 und angrenzend an die Anbringungsfläche 92 zugeordnete Außenfläche 95 ist eine zylindrische Aufweitung 96 vorhanden, in die eine Zentrierhülse teilweise eingesetzt werden kann. Der Übrige Abschnitt der Zentrierhülse wird in eine entsprechende zylindrische Erweiterung eingesetzt, die in Verbindungslöchern 97 an der Anbringungsfläche 92 vorhanden ist. Die Durchgangsbohrungen 93 verlaufen in Verbindungsrichtung R.

Das Gehäuse 91 wird außerdem von Einstecköffnungen 100 durchsetzt, die sich in Verbindungsrichtung R erstrecken und daher beispielsgemäß parallel zu den Durchgangsbohrungen 93 verlaufen. Die beiden Durchgangsbohrungen 93 sind in Querrichtung Q zwischen den Einstecköffnungen 100 angeordnet. Der Innendurchmesser der Einstecköffnungen 100 entspricht dem Aussendruchmesser an der breitesten Stelle des Haltestifts 82 und mithin dem Außendurchmesser des Kopfstücks 84 und des Zentrierabschnitts 88. Die Einstecköffnung 100 hat eine zylindrische Kontur. Sie durchsetzt das Gehäuse 91 vollständig. Jedem Haltestift 82 ist eine Einstecköffnung 100 zugeordnet. Der Abstand der Einstecköffnungen 100 im Gehäuse 91 entspricht dem Abstand der Haltestifte 84 in Querrichtung Q gesehen.

In Querrichtung Q wird das Gehäuse 91 von einer Aufnahmeöffnung 101 vollständig durchsetzt. Die Aufnahmeöffnung 101 ist beim Ausführungsbeispiel zylindrisch konturiert. Sie mündet in Querrichtung Q gesehen an jeweils einer Betätigungsseite 102 am Gehäuse 91 aus. In der Aufnahmeöffnung 101 ist wenigstens ein Verriegelungselement 103 und beispielsgemäß zwei Verriegelungselemente 103 in Querrichtung Q verschiebbar angeordnet. Jedem vorhandenem Haltekörper 81 ist ein Verriegelungselement 103 zugeordnet. Jedes Verriegelungselement 103 weist eine Verriegelungsfläche 110 auf, die in der Verriegelungsstellung an der zugeordneten Haltefläche 85 des Haltekörpers 81 anliegt und in der Entriegelungsstellung beispielsgemäß in Querrichtung Q mit Abstand zur Haltefläche 85 positioniert ist.

Die Verriegelungselemente 103 sind an ihrer Umfangsfläche zumindest abschnittsweise zylindrisch konturiert, so dass es in der zylindrischen Aufnahmeöffnung 101 verschiebbar geführt angeordnet ist. Um ein Verdrehen des Verriegelungselements 103 um seien Längsachse zu vermeiden, ist die Außenfläche 104 des Verriegelungselements 103 an einer Stelle mit einer Sicherungsfläche 105 versehen. Im Bereich der Sicherungsfläche 105 weicht die Außenfläche 104 von der zylindrischen Form ab. Die Sicherungsfläche 105 ist vorzugsweise als plane Fläche ausgeführt. Ein Sicherungsteil 106, beispielsweise ein zylindrischer Stift, liegt an der Sicherungsfläche 105 flächig oder linienförmig an. Hierfür ist das Sicherungsteil 106 in eine entsprechende Aussparung in der Gehäusewand des Gehäuses 91 angrenzend an die Sicherungsfläche 105 eingesetzt. Das stiftförmige Sicherungsteile 106 erstreckt sich beispielsgemäß parallel zu den Einstecköffnungen 100. In Querrichtung Q ist die Sicherungsfläche 105 ausreichend bereit, so das eine Verschiebung des Verriegelungselements 103 in Querrichtung Q durch das Sicherungsteil 106 nicht behindert wird.

Am inneren Endabschnitt 107 ist das Verriegelungselement 103 hohlzylindrisch ausgeführt. Dieser hohlzylindrische Endabschnitt 107 dient zur Aufnahme eines zugeordneten Endbereichs eines Vorspannelements 108, das das Verriegelungselement 103 in seien Verriegelungsstellung vorspannt. Das Vorspannelement 108 ist beispielsgemäß durch eine Schraubenfeder gebildet. Bei dem hier beschriebenen Beispiel ist in beiden Verriegelungselementen 103 ein gemeinsames Vorspannelement 108 zugeordnet. Das Vorspannelement 108 in Form der Schraubenfeder sowie die beiden Verriegelungselemente 103 sind entlang einer gemeinsamen Achse in der zylindrischen Aufnahmeöffnung 101 angeordnet. An den beiden axialen Endbereichen der Aufnahmeöffnung 101 angrenzend an eine jeweilige Betätigungsseite 102 ist in einer Sicherungsnut 109 jeweils ein nicht dargestellter Sicherungsring angeordnet, der beispielsweise als Sprengring ausgeführt sein kann. Dadurch sind die Verriegelungselemente 103 und das Vorspannelement 108 verliersicher in der Aufnahmeöffnung 101 gelagert.

In Erstreckungsrichtung der Einstecköffnungen 100 ist jedes Verriegelungselement 103 durch eine Verriegelungsöffnung 112 vollständig durchbrochen, an die die Verriegelungsfläche 110 angrenzt. Die Verriegelungsöffnung 112 weist einen teilzylindrischen ersten Öffnungsabschnitt 113 größeren Durchmessers und einen teilzylindrischen zweiten Öffnungsabschnitt 114 kleineren Durchmessers auf. Die beiden Öffnungsabschnitte 113, 114 sind durch sich in Radialrichtung überlappende parallele zylindrische Durchbrechungen gebildet. Der Querschnitt der Verriegelungsöffnung 112 hat daher eine schlüssellochähnliche Kontur. Beide Öffnungsabschnitte 113, 114 weisen jeweils eine auf einer Zylindermantelfläche liegende Umfangswand 113a bzw. 114a auf, die allerdings nicht vollständig ringförmig geschlossen ist, sondern an die jeweils andere Umfangswand 114a bzw. 113a des jeweils anderen Öffnungsabschnitts 114 bzw. 113 angrenzt.

Der zweite Öffnungsabschnitt 114 mit kleinerem Durchmesser weist an seinem axialen Ende eine Fase 110a auf. Die Fase 110a hat die Form eines Abschnitts einer Mantelfläche eines Kegelstumpfes. Ihr Neigungswinkel gegenüber der Längsachse der Zylindermantelfläche, auf der die Umfangswand des zweiten Öffnungsabschnitts 114 liegt, entspricht dem Winkel, den die Haltefläche 85 gegenüber der Längsachse des Haltestifts 82 einnimmt. Die Fase 110a bildest beim Ausführungsbeispiel die Verriegelungsfläche 110 an.

Der Durchmesser des ersten Öffnungsabschnitts 113 entspricht dem maximalen Durchmesser des Kopfstücks 84 des Haltestifts 82. Die Einstecköffnung 100 hat beispielsgemäß denselben Durchmesser.

Das Verriegelungselement 103 kann quer zur Erstreckungsrichtung der Einstecköffnungen 100 - also in Gebrauchslage der Verteilereinheit 18 in Querrichtung Q - verschoben werden, so dass in der Entriegelungsstellung die Längsachse des Haltestifts 82 der Längsachse des ersten Öffnungsabschnitts 113 entspricht, so dass der Haltestift 82 in das Verriegelungselement 103 hineingesteckt oder aus dem Verriegelungselement 103 herausgezogen werden kann. Demgegenüber ist in der Verriegelungsstellung die Längsachse des zweiten Öffnungsabschnitts 114 im Bereich der Längsachse des Haltestifts 82 angeordnet, wodurch das Kopfstück 84 mit seiner konischen Haltefläche 85 an der Fase 110a des Verriegelungselements 103 anliegt. Durch die Vorspannkraft des Vorspannelements 108 wird die Fase 110a gegen die Haltefläche 85 gedrückt, so dass das Kopfstück 84 nicht aus der Einstecköffnung 100 herausgezogen werden kann. In dieser Verriegelungsstellung liegt sowohl das Kopfstück 84 als auch der Zentrierabschnitt 88 des Haltestifts 88 an der Innenfläche der Einstecköffnung 100 an.

Zum Umschalten der Verriegelungselemente 103 zwischen der Verriegelungsstellung und der Entriegelungsstellung ist jedem Verriegelungselement 103 ein Betätigungselement 115 zugeordnet. Die Betätigungselemente 115 ragen auf einer jeweils zugeordneten Betätigungsseite 102 aus der Aufnahmeöffnung 101 und mithin aus dem Gehäuse 91 heraus. Beim Ausführungsbeispiel haben die Betätigungselemente 115 eine zylindrische Kontur und sind koaxial zum Verriegelungselement 103 angeordnet. Das Betätigungselement 115 ist vorzugsweise als ein Bauteil ohne Naht- und Fügestelle einstückig mit dem Verriegelungselement 103 ausgestaltet.

Von seinem freien Ende 116 her ist in das Betätigungselement 115 eine Eingreiföffnung 117 angebracht, die beispielsweise die Form eines Kreiskegels aufweist. Die Betätigungselemente 115 bzw. die Eingreiföffnungen 117 der beiden Betätigungselemente 115 sind fluchtend entlang einer gemeinsamen Betätigungsachse B angeordnet, wobei die Betätigungsachse B beim beschriebenen Beispiel der Längsachse der zylindrischen Aufnahmeöffnung 101 entspricht.

Über eine Greifeinrichtung kann die Verteilereinheit 18 ergriffen und bewegt werden. Dabei wird gleichzeitig die Verriegelungseinrichtung 80 in ihren Entriegelungszustand gebracht, in dem die Verriegelungselemente 103 ihre Entriegelungsstellung einnehmen. Da die beiden Betätigungselemente 115 entlang der gemeinsamen Betätigungsachse B angeordnet sind kann beim Ergreifen der Verteilereinheit 18 durch einen gegenüber der Betätigungsachse B versetzten Schwerpunkt der Verteilereinheit 18 und/oder des gemeinsam mit der Verteilereinheit 18 bewegten Werkzeugs ein Kippmoment um die Betätigungsachse B erzeugt werden. Um ein solches Kippen und eine undefinierte Ausrichtung der Verteilereinheit 18 während des Transports durch die Greifereinrichtung zu vermeiden ist an zumindest einer Betätigungsseite 102 und beispielsgemäß an beiden Betätigungsseiten 102 zumindest ein Abstützelement 120 vorhanden, das eine Abstützfläche 121 für die Greifereinrichtung bereitstellt. Beim Ausführungsbeispiel sind an jeder Betätigungsseite 102 zwei mit Abstand zueinander angeordnete Abstützelemente 120 vorhanden. Beispielsgemäß handelt es sich jeweils um einen Abstützflansch, an dem die Abstützfläche 121 auf der dem Bedienelement 15 zugeordneten Seite angeordnet ist. Das Bedienelement 115 ist mithin im Wesentlichen mittig zwischen zwei Abstützflanschen bzw. Abstützflächen 121 angeordnet. Das wenigstens eine Abstützelement 120 dient somit als Kipp- oder Verdrehsicherung für die Verteilereinheit 18 bei der Handhabung mit einer Greifereinrichtung der Werkzeugmaschine.

Bei hergestellter Verbindung zwischen der Anschlusseinheit 17 und der Verteilereinheit 18 greifen die beiden Haltestifte 82 in die Einstecköffnungen 100 ein und die Verriegelungsflächen 110 der beiden Verriegelungselemente 103 liegen an der jeweils zugeordneten Haltefläche 85 des betreffenden Haltekörpers 81 an, wodurch eine Zugkraft auf die Verteilereinheit 18 in Verbindungsrichtung R ausgeübt wird, die in eine Anpresskraft zwischen der Verteilerfläche 65 und der Anschlussfläche 27 umgesetzt wird. Eine Relativbewegung der Verteilereinheit 18 gegenüber der Anschlusseinheit 17 ist in diesem Verriegelungszustand vermieden.

Um die Verteilereinheit 18 von der Anschlusseinheit 17 zu trennen wird diese von einer Greifereinrichtung von den beiden Betätigungsseiten 102 her an der Betätigungseinheit 90 und beispielsgemäß an den Betätigungselementen 115 ergriffen, wodurch diese aufeinander zu gedrückt und dadurch das jeweils zugeordnete Verriegelungselement 113 in seine Entriegelungsstellung gebracht wird. Die Greifereinrichtung kann dann die gesamte Verteilereinheit 18 in Verbindungsrichtung R bewegen, wobei die Haltestifte 82 aus den Einstecköffnungen 100 herausbewegt werden. Die Herstellung der Verbindung zwischen der Anschlusseinheit 17 und der Verteilereinheit 18 erfolgt analog mit einer Bewegung in in entgegengesetzter Richtung.

Die Erfindung betrifft ein Kühlmittelverteiler 10 mit einer relativ zum Maschinengestell unbeweglich montierten Anschlusseinheit 17 und einer auswechselbaren Verteilereinheit 18. Die Verteilereinheit 18 kann über eine der Werkzeugmaschine zugeordneten Greifereinrichtung mit der Anschlusseinheit 17 verbunden oder von dieser getrennt werden. Die Anschlusseinheit 17 weist eine Anschlussfläche 27 auf, an der wenigstens ein Zufuhrkanal 25 für Kühlmittel ausmündet. Zur Anlage mit der Anschlussfläche 27 ist eine Verteilerfläche 65 an der Verteilereinheit 18 vorhanden, an der wenigstens ein Verteilerkanal 66 ausmündet. Gegenüber einer Verbindungsrichtung R, in die die Verteilereinheit 18 zum Herstellen und Trennen der Verbindung bewegt wird, sind sowohl die Ebene, in der sich die Anschlussfläche 27 erstreckt, sowie die Ebene, in der sich die Verteilerfläche 65 erstreckt, geneigt. Über eine Verriegelungseinrichtung 80 kann in Verbindungsrichtung R eine Haltekraft auf die Verteilereinheit 18 ausgeübt werden, um diese in der mit der Anschlusseinheit 17 verbundenen Stellung mit einer vorgegebenen Anpresskraft zwischen Anschlussfläche 27 und Verteilerfläche 65 zu halten. Eine einfach herzustellende und wieder zu trennende fluiddichte Verbindung zwischen dem wenigstens einen Zufuhrkanal 25 und dem jeweils zugeordneten Verteilerkanal 66 ist dadurch erreicht.

### Bezugszeichenliste:

- 10: Kühlmittelverteiler
- 11: zu kühlende Stellen
- 12: Bearbeitungswerkzeug
- 13: Schleifscheibe

- 17: Anschlusseinheit
- 18: Verteilereinheit
- 19: Verteilerkörper
- 20: Verteileranschluss
- 21: Leitung

- 25: Zufuhrkanal
- 26: Zufuhrkanalmündung
- 27: Anschlussfläche
- 28: Flächenabschnitt der Anschlussfläche
- 29: Dichtrand
- 30: Anschlusskörper
- 31: Anschlussplatte
- 32: Ausnehmung
- 33: Grundkörper
- 34: Boden der Aussparung
- 35: nachgiebiges Element
- 36: Dichtelement
- 37: Ringnut
- 38: erster Abschnitt des Zufuhrkanals
- 39: zweiter Abschnitt des Zufuhrkanals
- 40: Innenseite der Anschlussplatte
- 41: Ringstufe

- 44: Ablaufnut
- 45: Kühlmittelrohr
- 48: Haltebügel
- 49: Halteabschnitt
- 50: Vertiefung
- 51: Außenseite der Anschlussplatte

- 55: Führungseinrichtung
- 56: Führungsschiene
- 57: Anlagefläche
- 58: Sockel
- 59: Befestigungsfläche
- 60: Einführseite

- 64: Gegenanlagefläche
- 65: Verteilerfläche
- 66: Verteilerkanal
- 67: Verteilerkanalmündung
- 68: Ausgangsöffnung
- 69: Seitenvorsprung
- 69: Rückseite des Seitenvorsprungs
- 70: Längsaussparung
- 71: Vorderseite des Verteilerkörpers
- 72: Rückseite des Verteilerkörpers

- 80: Verriegelungseinrichtung
- 81: Haltekörper
- 82: Haltestift
- 83: freies Ende des Haltestifts
- 84: Kopfstück
- 85: Haltefläche
- 86: Zentralabschnitt
- 87: Befestigungsende
- 88: Zentrierabschnitt

- 90: Betätigungseinheit
- 91: Gehäuse
- 92: Anbringungsfläche
- 93: Durchgangsbohrung
- 94: Ringschulter
- 95: Außenfläche des Gehäuses
- 96: Erweiterung
- 97: Verbindungsloch

- 100: Einstecköffnung
- 101: Aufnahmeöffnung
- 102: Betätigungsseite
- 103: Verriegelungselement
- 104: Außenfläche
- 105: Abflachung
- 106: Sicherungsteil
- 107: innerer Endabschnitt
- 108: Vorspannelement
- 109: Sicherungsring
- 110: Verriegelungsfläche
- 110a: Fase

- 112: Verriegelungsöffnung
- 113: erster Öffnungsabschnitt
- 113a: Umfangswand des ersten Öffnungsabschnitts
- 114: zweiter Öffnungsabschnitt
- 114a: Umfangswand des zweiten Öffnungsabschnitts
- 115: Betätigungselement
- 116: freies Ende des Betätigungselements
- 117: Eingreiföffnung

- 120: Abstützelement

- B: Betätigungsachse
- H: Höhenrichtung
- Q: Querrichtung
- R: Verbindungsrichtung

## Patentansprüche

1. Kühlmittelverteiler (10) für eine Werkzeugmaschine,
mit einer zur Befestigung am Maschinengestell eingerichteten Anschlusseinheit (17), die eine Anschlussfläche (27) aufweist, an der wenigstens ein Zufuhrkanal (25) für das Kühlmittel ausmündet,
**gekennzeichnet durch**
eine an der Anschlusseinheit (17) angeordnete Führungseinrichtung (55), die wenigstens eine um einen Neigungswinkel (α) geneigt zur Anschlussfläche (27) verlaufende Anlagefläche (57) aufweist,
eine Verteilereinheit (18), die eine Verteilerfläche (65) aufweist, an der wenigstens ein Verteilerkanal (66) ausmündet und die wenigstens eine der Anlagefläche (57) zugeordnete Gegenanlagefläche (64) aufweist, die gegenüber der Verteilerfläche (65) um den Neigungswinkel (α) geneigt verläuft,
wobei die Verteilereinheit (18) in einer sich parallel zur Anlagefläche (57) erstreckenden Verbindungsrichtung (R) relativ zur Anschlusseinheit (17) bewegbar ist, um eine Verbindung zwischen der Verteilereinheit (18) und der Anschlusseinheit (17) herzustellen oder zu trennen,
und wobei bei hergestellter Verbindung zwischen der Verteilereinheit (18) und der Anschlusseinheit (17) die an der Anlagefläche (57) anliegende Gegenanlagefläche (64) die Verteilerfläche (65) gegen die Anschlussfläche (27) drückt.

2. Kühlmittelverteiler (10) nach Anspruch 1,
**dadurch gekennzeichnet, dass** die Anschlusseinheit (17) einen Grundkörper (33) und einen verschiebbar am Grundkörper (33) angeordneten Anschlusskörper (30) aufweist, wobei der Anschlusskörper (30) auf der dem Grundkörper (33) abgewandten Seite die Anschlussfläche (27) aufweist und wobei zwischen dem Grundkörper (33) und dem Anschlusskörper (30) wenigstens ein nachgiebiges Element (35) angeordnet ist.

3. Kühlmittelverteiler (10) nach Anspruch 2,
**dadurch gekennzeichnet, dass** das wenigstens eine nachgiebige Element (35) als Dichtungselement (36) zur fluiddichten Verbindung zwischen dem im Grundkörper (33) verlaufenden Abschnitt (38) und dem im Anschlusskörper (30) verlaufenden Abschnitt (39) des Zufuhrkanals (25) dient.

4. Kühlmittelverteiler (10) nach Anspruch 2 oder 3,
**dadurch gekennzeichnet, dass** zwischen dem im Grundkörper (33) verlaufenden Abschnitt (38) und dem im Anschlusskörper (30) verlaufenden Abschnitt (39) des Zufuhrkanals (25) am Anschlusskörper (30) eine Ringstufe (41) gebildet ist.

5. Kühlmittelverteiler (10) nach einem der vorhergehenden Ansprüche,
**dadurch gekennzeichnet, dass** die Führungseinrichtung (55) zwei sich parallel zueinander in Verbindungsrichtung (R) erstreckende Führungsschienen (56) aufweist, die auf gegenüberliegenden Seiten der Anschlussfläche (27) angeordnet sind.

6. Kühlmittelverteiler (10) nach Anspruch 5,
**dadurch gekennzeichnet, dass** jede Führungsschiene (56) eine Anlagefläche (57) aufweist, die der Anschlussfläche (27) zugewandt ist, wobei sich der Abstand zwischen den Anlageflächen (57) und der Anschlussfläche (27) von einer Einführseite (60) aus in Verbindungsrichtung (R) verringert.

7. Kühlmittelverteiler (10) nach Anspruch 5 oder 6,
**dadurch gekennzeichnet, dass** die Führungsschienen (56) lösbar an einem jeweils zugeordneten Sockel (58) der Anschlusseinheit (17) angeordnet sind.

8. Kühlmittelverteiler (10) nach einem der vorhergehenden Ansprüche,
**dadurch gekennzeichnet, dass** die Anschlussfläche (27) an wenigstens einem ringförmig geschlossenen Dichtrand (29) vorhanden, der jeweils eine zugeordnete Ausmündung (26) des Zufuhrkanals (25) umschließt.

9. Kühlmittelverteiler (10) nach einem der vorhergehenden Ansprüche,
**dadurch gekennzeichnet, dass** eine Verriegelungseinrichtung (80) vorhanden ist, die in ihrem Verriegelungszustand eine Relativbewegung der Verteilereinheit (18) gegenüber der Anschlusseinheit (17) verhindert.

10. Kühlmittelverteiler (10) nach Anspruch 9,
**dadurch gekennzeichnet, dass** die Verriegelungseinrichtung (80) eine an der Anschlusseinheit (17) befestigte Betätigungseinheit (90) mit wenigstens einem Verriegelungselement (103) aufweist, das zwischen einer Verriegelungsstellung und einer Entriegelungsstellung verschiebbar gelagert ist.

11. Kühlmittelverteiler (10) nach Anspruch 10,
**dadurch gekennzeichnet, dass** das wenigstens eine Verriegelungselement (103) durch eine Vorspannkraft eines Vorspannelements (108) beaufschlagt ist, um das Verriegelungselement (103) in der Verriegelungsstellung zu halten oder in die Verriegelungsstellung zu bewegen.

12. Kühlmittelverteiler (10) nach Anspruch 10 oder 11,
**dadurch gekennzeichnet, dass** das wenigstens eine Verriegelungselement (103) ein Betätigungsteil (115) aufweist, das aus einem Gehäuse (91) der Betätigungseinheit (90) herausragt.

13. Kühlmittelverteiler (10) nach Anspruch 12,
**dadurch gekennzeichnet, dass** zwei Verriegelungselemente (103) vorhanden sind und die Betätigungsteile (115) auf entgegengesetzten Seiten (102) des Gehäuses (91) der Betätigungseinheit (90) herausragen.

14. Kühlmittelverteiler (10) nach Anspruch 12 oder 13, **dadurch gekennzeichnet, dass** das Betätigungsteil (115) gleichzeitig zum Ergreifen der Verteilereinheit (18) durch eine Greifereinrichtung dient.

15. Kühlmittelverteiler (10) nach Anspruch 14,
**dadurch gekennzeichnet, dass** benachbart und mit Abstand zum Betätigungsteil (115) am Gehäuse (91) der Betätigungseinheit (90) ein Abstützelement (120) vorhanden ist, an dem sich die Greifereinrichtung beim Ergreifen der Verteilereinheit (18) abstützen kann.

## Claims

1. Coolant distributor (10) for a machine tool,
having a connection unit (17) which is configured for attachment to the machine frame, said connection unit (17) having a connection surface (27), onto which at least one supply channel (25) for the coolant opens out,
**characterised by**
a guiding device (55) which is arranged on the connection unit (17), said guiding device (55) having at least one contact surface (57) which runs at an inclination to the connection surface (27) at an angle of inclination (α),
a distribution unit (18) which has a distribution surface (65), onto which at least one distribution channel (66) opens out and which has at least one counter contact surface (64) allocated to the contact surface (57), said counter contact surface (64) running at an inclination with respect to the distribution surface (65) at the angle of inclination (α),
wherein the distribution unit (18) is able to be moved in a connection direction (R) extending in parallel to the contact surface (57) relative to the connection unit (17) in order to establish or disconnect a connection between the distribution unit (18) and the connection unit (17),
and wherein, in the event of a connection being established between the distribution unit (18) and the connection unit (17), the counter contact surface (64) abutting on the contact surface (57) presses the distribution surface (65) against the connection surface (27).

2. Coolant distributor (10) according to claim 1,
**characterised in that** the connection unit (17) has a base body (33) and a connection body (30) arranged moveably on the base body (33), wherein the connection body (30) has the connection surface (27) on the side facing away from the base body (33) and wherein at least one resilient element (35) is arranged between the base body (33) and the connection body (30).

3. Coolant distributor (10) according to claim 2,
**characterised in that** at least one resilient element (35) serves as a sealing element (36) for the fluid-tight connection between the section (38) extending in the base body (33) and the section (39) of the supply channel (25) extending in the connection body (30).

4. Coolant distributor (10) according to claim 2 or 3,
**characterised in that** an annular step (41) is formed on the connection body (30) between the section (38) extending in the base body (33) and the section (39) of the supply channel (25) extending in the connection body (30).

5. Coolant distributor (10) according to one of the preceding claims,
**characterised in that** the guiding device (55) has two guide rails (56) which extend in parallel to each other in the connection direction (R), said guide rails (56) being arranged on opposite sides of the connection surface (27).

6. Coolant distributor (10) according to claim 5,
**characterised in that** each guide rail (56) has a contact surface (57) which faces towards the connection surface (27), wherein the distance between the contact surfaces (57) and the connection surface (27) is reduced from an insertion side (60) in the connection direction (R).

7. Coolant distributor (10) according to claim 5 or 6,
**characterised in that** the guide rails (56) are arranged detachably on a respectively allocated base (58) of the connection unit (17).

8. Coolant distributor (10) according to one of the preceding claims,
**characterised in that** the connection surface (27) is present on at least one annularly closed sealing rim (29), which encloses an allocated outlet (26) of the supply channel (25) respectively.

9. Coolant distributor (10) according to one of the preceding claims,
**characterised in that** a locking device (80) is present which, in its locked state, prevents a relative movement of the distribution unit (18) with respect to the connection unit (17).

10. Coolant distributor (10) according to claim 9,
**characterised in that** the locking device (80) has an operating unit (90) attached to the connection unit (17) having at least one locking element (103), said locking element (103) being mounted so as to be able to be moved between a locked position and an unlocked position.

11. Coolant distributor (10) according to claim 10,
**characterised in that** the at least one locking element (103) is impinged by a preload force of a preload element (108) in order to hold the locking element (103) in the locked position or to move it into the locked position.

12. Coolant distributor (10) according to claim 10 or 11,
**characterised in that** the at least one locking element (103) has an operating part (115) which protrudes from a housing (91) of the operating unit (90).

13. Coolant distributor (10) according to claim 12,
**characterised in that** two locking elements (103) are present and the operating parts (115) protrude on opposite sides (102) of the housing (91) of the operating unit (90).

14. Coolant distributor (10) according to claim 12 or 13,
**characterised in that** the operating part (115) also serves to grip the distribution unit (18) by means of a gripper device.

15. Coolant distributor (10) according to claim 14,
**characterised in that** a support element (120) is present on the housing (91) of the operating unit (90), adjacent to and at a distance from the operating part (115), on which support element (120) the gripper device can be supported during the gripping of the distribution unit (18).

## Revendications

1. Distributeur de fluide de refroidissement (10) pour une machine-outil,
comprenant une unité de raccordement (17) qui est conçue pour une fixation au bâti de la machine et présente une surface de raccordement (27) au niveau de laquelle débouche au moins un conduit d'arrivée (25) pour le fluide de refroidissement,
**caractérisé en ce qu'**il comprend
un dispositif de guidage (55) qui est placé sur l'unité de raccordement (17) et présente au moins une surface d'appui (57) inclinée sous un angle d'inclinaison (α) par rapport à la surface de raccordement (27),
une unité de distribution (18) qui présente une surface de distribution (65) au niveau de laquelle débouche au moins un conduit de distribution (66) et qui présente au moins une surface d'appui antagoniste (64) qui est associée à la surface d'appui (57) et est inclinée sous l'angle d'inclinaison (α) par rapport à la surface de distribution (65),
sachant que l'unité de distribution (18) peut être déplacée par rapport à l'unité de raccordement (17) dans un sens de liaison (R) s'étendant parallèlement à la surface d'appui (57), afin d'établir ou d'interrompre une liaison entre l'unité de distribution (18) et l'unité de raccordement (17),
et sachant que lorsque la liaison entre l'unité de distribution (18) et l'unité de raccordement (17) est établie, la surface d'appui antagoniste (64) qui est appliquée contre la surface d'appui (57) presse la surface de distribution (65) contre la surface de raccordement (27).

2. Distributeur de fluide de refroidissement (10) selon la revendication 1, **caractérisé en ce que** l'unité de raccordement (17) présente un corps de base (33) et un corps de raccordement (30) disposé avec possibilité de déplacement sur le corps de base (33), le corps de raccordement (30) présentant la surface de raccordement (27) sur le côté opposé au corps de base (33), et au moins un élément (35) souple étant disposé entre le corps de base (33) et le corps de raccordement (30).

3. Distributeur de fluide de refroidissement (10) selon la revendication 2, **caractérisé en ce que** l'élément (35) souple, au nombre d'au moins un, sert d'élément d'étanchéité (36) pour la liaison étanche aux fluides entre la portion (38) du conduit d'arrivée (25) qui s'étend dans le corps de base (33) et la portion (39) qui s'étend dans le corps de raccordement (30).

4. Distributeur de fluide de refroidissement (10) selon la revendication 2 ou 3, **caractérisé en ce qu'**un gradin annulaire (41) est formé sur le corps de raccordement (30), entre la portion (38) du conduit d'arrivée (25) qui s'étend dans le corps de base (33) et la portion (39) qui s'étend dans le corps de raccordement (25).

5. Distributeur de fluide de refroidissement (10) selon l'une des revendications précédentes, **caractérisé en ce que** le dispositif de guidage (55) présente deux rails de guidage (56) qui s'étendent parallèlement l'un à l'autre dans le sens de liaison (R) et sont disposés sur des côtés opposés de la surface de raccordement (27).

6. Distributeur de fluide de refroidissement (10) selon la revendication 5, **caractérisé en ce que** chaque rail de guidage (56) présente une surface d'appui (57) qui est tournée vers la surface de raccordement (27), la distance entre les surfaces d'appui (57) et la surface de raccordement (27) diminuant à partir d'un côté d'insertion (60) dans le sens de liaison (R).

7. Distributeur de fluide de refroidissement (10) selon la revendication 5 ou 6, **caractérisé en ce que** les rails de guidage (56) sont disposés de façon amovible sur un socle (58) respectivement associé de l'unité de raccordement (17).

8. Distributeur de fluide de refroidissement (10) selon l'une des revendications précédentes, **caractérisé en ce que** la surface de raccordement (27) est présente sur au moins un bord d'étanchéité (29) fermé sous forme d'anneau, qui entoure respectivement une embouchure (26) associée du conduit d'arrivée (25).

9. Distributeur de fluide de refroidissement (10) selon l'une des revendications précédentes, **caractérisé en ce qu'**il est prévu un dispositif de verrouillage (80) qui, dans son état de verrouillage, empêche un mouvement relatif de l'unité de distribution (18) par rapport à l'unité de raccordement (17).

10. Distributeur de fluide de refroidissement (10) selon la revendication 9, **caractérisé en ce que** le dispositif de verrouillage (80) présente une unité d'actionnement (90) fixée à l'unité de raccordement (17) et comprenant au moins un élément de verrouillage (103) qui est monté avec possibilité de déplacement entre une position de verrouillage et une position de déverrouillage.

11. Distributeur de fluide de refroidissement (10) selon la revendication 10, **caractérisé en ce que** l'élément de verrouillage (103), au nombre d'au moins un, est sollicité par une force de précontrainte d'un élément de précontrainte (108) afin de maintenir l'élément de verrouillage (103) dans la position de verrouillage ou de le déplacer jusque dans la position de verrouillage.

12. Distributeur de fluide de refroidissement (10) selon la revendication 10 ou 11, **caractérisé en ce que** l'élément de verrouillage (103), au nombre d'au moins un, présente un organe d'actionnement (115) qui fait saillie à partir d'un boîtier (91) de l'unité d'actionnement (90).

13. Distributeur de fluide de refroidissement (10) selon la revendication 12, **caractérisé en ce que** deux éléments de verrouillage (103) sont présents et les organes d'actionnement (115) font saillie sur des côtés (102) opposés du boîtier (91) de l'unité d'actionnement (90).

14. Distributeur de fluide de refroidissement (10) selon la revendication 12 ou 13, **caractérisé en ce que** l'organe d'actionnement (115) sert en même temps à saisir l'unité de distribution (18) par l'intermédiaire d'un dispositif de préhension.

15. Distributeur de fluide de refroidissement (10) selon la revendication 14, **caractérisé en ce que** dans le voisinage et à distance de l'organe d'actionnement (115), il est prévu, sur le boîtier (91) de l'unité d'actionnement (90), un élément d'appui (120) sur lequel le dispositif de préhension peut prendre appui lorsqu'il saisit l'unité de distribution (18).
